# EUROPEAN PATENT APPLICATION

(11) **EP 3 885 868 A1**
(43) Date of publication of application: **29.09.2021**
(21) Application number: 20172018.2
(22) Date of filing: 29.04.2020
(51) Int. Cl.: G05D 1/02

(54) **METHOD, SYSTEM AND INTELLIGENT TERMINAL FOR CONTROLLING AN OPERATING RANGE OF A WALKING DEVICE**

(30) Priority: 27.03.2020 CN 202010227846
(71) Applicant: Ningbo NGP Industry Co., Ltd., Ningbo, Zhejiang 315000 (CN)
(72) Inventor: CHEN, Jianping, NINGBO, Zhejiang 315000 (CN); YANG, Yanan, NINGBO, Zhejiang 315000 (CN); WANG, Shuang, NINGBO, Zhejiang 315000 (CN)
(74) Representative: Dr. Gassner & Partner mbB

(57) **Abstract**

The present application relates to a method, a system, and intelligent terminal for controlling the operating range of a walking device.

## Description

### FIELD OF THE INVENTION

The present application relates to the field of an electric walking device, and in particular, to a method, a system, and an intelligent terminal for controlling the operating range of a walking device.

### DESCRIPTION OF RELATED ART

An intelligent mower can automatically cut grass and get charged in the lawn of a user, without the user's interference.

The above technical solution in the prior art has the following deficiency: before using an intelligent mower, an artificial wiring has to be performed through an electronic fence or a wire, so as to define the operating range of the intelligent mower. However, installing an electronic fence or performing an artificial wiring is time-consuming and laborious. Therefore, there is still some room for improvement.

### BRIEF SUMMARY OF THE INVENTION

A first object of the present application is to provide a method for controlling an operating range of a walking device, which eliminates the need of an electronic fence, reduces the time and cost for manual installation, and improves the use efficiency.

The first object is achieved by the following technical solution:
a method for controlling an operating range of a walking device, including:
acquiring a current position information of the walking device in a use place;
judging whether the position of the walking device is in a preset operating area information according to the current position information;
outputting a feedback information to the walking device so that the walking device moves and works in an operating area corresponding to the operating area information if the position of the walking device is in the operating area information;
the operating area information is established by the steps of:
   acquiring a border triggering information, which includes an outer border triggering information;
   acquiring an information of outer border points corresponding to an outer border according to the outer border triggering information, and enclosing all the border points in the information of outer border points to form a closed area of the outer border; and
   forming an operating area information according to the closed area of the outer border.

In the above technical solution, the position of the current walking device in a use place is acquired through its current position information. An operating area information defines the operating rage of the walking device. The walking device moves and works in the operating area through a feedback information, eliminating the need of an electronic fence, reducing the time and cost for manual installation, and improving the use efficiency. After triggering the outer border triggering information, the points on the outer border are acquired and enclosed to form a closed area, finishing the acquiring of the operating area information.

In a preferred embodiment, the operating area information is established by the steps of:
acquiring a border triggering information, including an inner border triggering information;
acquiring an information of inner border points corresponding to an inner border according to the inner border triggering information, enclosing all the inner border points in the information of inner border points to form a closed area of the inner border; and
forming an operating area information according to the closed area of the outer border and the closed area of the inner border.

In the above technical solution, an inner border is acquired via the border triggering information in addition to an outer border, so that the walking device will not move out of the outer border or into the inner border, so as to improve the overall stability. Furthermore, after acquiring the inner border triggering information, the points on the inner border are acquired and enclosed to form a closed area, which is combined with the closed area of the outer border to provide an operating area information.

In a further preferred embodiment, the method further includes:
acquiring a current verification triggering information, including an outer border verification triggering information;
controlling the walking device to move along a border area corresponding to the information of outer border points to acquire an information of actual outer border points according to the outer border verification triggering information; and
finishing the verification if a range corresponding to the information of actual outer border points is in consistent with a range corresponding to the information of outer border points; or otherwise, reacquiring an information of outer border points.

In the above technical solution, after acquiring the outer border, the walking device is controlled to move along the border points, so as to improve the overall accuracy. In addition, after triggering the verification triggering information, the verification is performed, so as to improve the overall stability via a double check.

In a further preferred embodiment, the method includes:
acquiring a current verification triggering information, including an inner border verification triggering information;
controlling the walking device to move along the border area corresponding to an information of inner border points so as to acquire an information of actual inner border information; and
finishing the verification if a range corresponding to the information of actual inner border points is in consistent with a range corresponding to the information of inner border points; or otherwise, reacquiring an information of inner border points.

In the above technical solution, after acquiring the inner border, the walking device is controlled to move along the border points, so as to improve the overall accuracy. In addition, after triggering the verification triggering information, the verification is performed, so as to improve the overall stability via a double check.

In a further preferred embodiment, a method for acquiring a closed area by enclosing border points includes:
acquiring a current enclosing generation information;
real time acquiring an information of current border points according to a border triggering information, and real time uploading and storing the information of current border points, during which the information of the border points is acquired and stored at a preset time interval and the firstly acquired information of border points is recorded;
comparing the firstly acquired information of border points with sequentially uploaded information of border points;
pausing acquiring the border points and judging whether an enclosing is completed if an enclosing generation information is received; and
judging whether the distance difference between the firstly acquired border points and a lastly acquired border points is smaller than or equal to a preset reference distance difference, so as to stop acquiring the information of border points and enclose the border points to form a closed area if yes; or otherwise, give an alarm.

In the above technical solution, after acquiring an enclosing generation information, the enclosing is actively started and acquiring the border points is stopped. the distance difference of the firstly acquired border points is compared with that of the lastly acquired border points, so as to judge whether a closed area is formed.

In a preferred embodiment, a method for acquiring a reference distance difference includes:
acquiring the distance between adjacent border points in an information of border points;
real time calculating and permuting acquired distances, and real time updating to select the smallest distance difference among the current distance differences as a reference distance difference; and
real time updating the reference distance difference until a closed area is formed by enclosing.

In the above technical solution, when acquiring the distance difference, the border points are sequentially acquired and the smallest distance difference is selected, so as to improve the overall stability. Further, since the border points can be real time acquired, the walking device can be applicable to different operating places.

The second object of the present application is to provide a system for controlling an operating range of a walking device, which eliminates the need of installing an electronic fence, reduces the time and cost of manual installation, and improves the use efficiency.

The second object is achieved by the following technical solution:
a system for controlling an operating range of a walking device, including:
an acquiring module, configured to acquire a position information, a border triggering information, an enclosing generation information, and a border point;
a storage device, configured to store steps of a method for controlling an operating range of a walking device; and
a processor, configured to load and execute the steps stored in the storage device and achieve the method for controlling an operating range of a walking device.

In the above technical solution, the position of the current walking device in a use place is acquired through its current position information. An operating area information defines the operating rage of the walking device. The walking device moves and works in the operating area through a feedback information, eliminating the need of an electronic fence, reducing the time and cost for manual installation, and improving the use efficiency.

A third object of the present application is to provide an intelligent terminal, which eliminates the need of installing an electronic fence, reduces the time and cost of manual installation, and improves the use efficiency.

The above third object is achieved by the following technical solution:
an intelligent terminal including a storage device and a processor, with a computer program being stored in the storage device and being able to be loaded by the processor to execute a method for controlling an operating range of a walking device.

In the above technical solution, the position of the current walking device in a use place is acquired through its current position information. An operating area information defines the operating rage of the walking device. The walking device moves and works in the operating area through a feedback information, eliminating the need of an electronic fence, reducing the time and cost for manual installation, and improving the use efficiency.

A fourth objection of the present application is to provide a computer readable storage medium capable of storing corresponding procedures, which eliminates the need of installing an electronic fence, reduces the time and cost of manual installation, and improves the use efficiency.

The fourth object is achieved by the following technical solution:
a computer readable storage medium configured for storing a computer program which can be loaded and executed by a processor to achieve any of the above methods for controlling the operating range of a walking device.

In the above technical solution, the position of the current walking device in a use place is acquired through its current position information. An operating area information defines the operating rage of the walking device. The walking device moves and works in the operating area through a feedback information, eliminating the need of an electronic fence, reducing the time and cost for manual installation, and improving the use efficiency.

In summary, the present application provides at least one of the following beneficial technical effects:
There is no need to install an electronic fence, and thus the time and cost for manual installment is reduced and the use efficiency is improved; and

The enclosing is accurate and rapid.

### BRIEF DESCRIPTION OF DRAWINGS

FIG.l is a schematic diagram of a method for controlling the operating range of a walking device;
FIG. 2 is a schematic diagram of a method for acquiring an outer boarder;
FIG. 3 is a schematic diagram of a method for acquiring an inner boarder;
FIG. 4 is a schematic diagram of a method for verifying the outer boarder;
FIG. 5 is a schematic diagram of a method for verifying the inner boarder;
FIG. 6 is a schematic diagram of a method for enclosing a closed area by border points; and
FIG. 7 is a schematic diagram of a method for acquiring a reference distance difference.

### DETAILED DESCRIPTION

The present application will be described in detail below in connection with the drawings.

The following embodiments are merely provided for the purpose of explaining the present application, rather than imposing any limitation thereto. Modifications made to the embodiments can be made by those skilled in the art after reading the present disclosure, and falls within the scope of the present application as defined in the attached claims.

An embodiment according to the present application provides a method for controlling the operating range of a walking device, which eliminates the need of installing an electronic fence, reduces the time and cost for manual installation, and improves the use efficiency.

For the purpose of better understanding the objects, technical solutions, and advantages of the embodiments according to the present application, the technical solutions provided in the embodiments will be clearly and completely described in connection with the drawings. It is apparent that, the embodiments as described are only some, but not all, of the embodiments of the present application. Other embodiments made by those skilled in the art based on the concept of the present application are all within the scope of the present application.

The embodiments of the present application will be described in detail below in connection with the drawings.

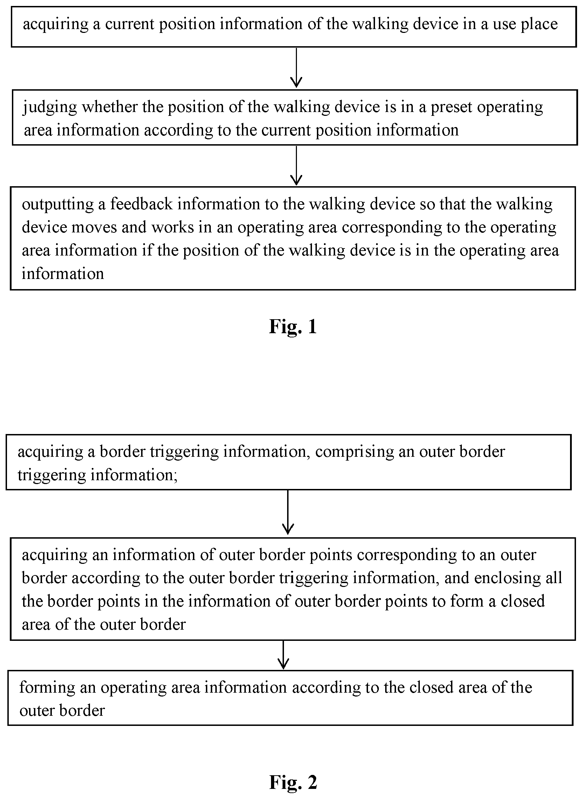

Referring to **FIG. 1****,** an embodiment of the present application provides a method for controlling the operating range of a walking device, which eliminates the need of an electronic fence by positioning the walking device and synchronously positioning a border line. In particular, it includes the following steps:
**Step 100:** acquiring a current position information of a current walking device in a current use place.

In particular, a positioning tag is detachably connected on the walking device. In one embodiment, the positioning tag is an electronic tag. During the positioning, the positioning tag is positioned by the coordination of at least three positioning base stations. Three positioning base stations are chosen in one embodiment as an example, however, more than three, for example, four or five, positioning base stations can also be adopted and used in the same way.

Preferably, a UWB positioning base station is selected as the positioning base station for positioning the positioning tag, but other signal sources for measuring a distance, for example, an ultrasonic wave or an infrared ray, can also be adopted. When deploying a positioning base station, the positioning base station is 0.5 m or higher above the ground (the higher, the better), and located at the farthest position at the periphery of the site. Preferably, three positioning base stations are located in an isosceles triangle arrangement. In this way, the largest coverage and positioning accuracy can be achieved, so that a positioning tag module can measure the distance of a positioning tag from a positioning base station wherever it is in the site.

The positioning tag needs to be charged. In one embodiment, the positioning tag module is charged by a duel power supply, for example, including a lithium battery and an external power supply. Other way of charging can be adopted, which can be selected by an operator. In another embodiment, the positioning tag is charged by a duel power supply including a secondary battery and a solar cell. Other way of charging can be adopted, which can be selected by an operator.

By measuring the linear distances of the positioning tag from three positioning base stations, the current position information of the walking device can be determined.

**Step 101:** judging whether a current position is in a preset operating area information based on the current position information.

The operating area information is a preset area, which can be directly invoked from a database, or can be measured at the site. The operating area information defines the outermost outer border, in which the walking device moves and works, without crossing the border. The current position information is compared with the coordinates in the operating area information to judge the position of the walking device.

**Step 102:** outputting a feedback information to the walking device if the current position is in the operating area information, so that the walking device moves and works in the operating area corresponding to the operating area information.

When the current position of the walking device is in the operating area information, a feedback information is output into the walking device, so as to control the walking device to move and walk in the operating area corresponding to the operating area information. When it is detected that the walking device is at the border, there is a need to control the walking device to change its walking state, that is, changing a direction. The way of changing the current walking state, that is, the way of changing the current direction of movement, can be achieved by many approaches, for example, those well known to those skilled in the art.

Referring to **FIG. 2****,** the operating area information can be acquired by invoking a pre-stored data or can be measured at the site, the former of which involves directly invoking a data and thus is not repeated here. It is to be noted that the pre-stored data needs to be acquired at the site for the first time and then stored. The steps of a method for acquiring a data at the site, that is, the steps of a method for establishing an operating area information is disclosed as follows:
**Step 200:** acquiring a border triggering information, which includes an outer border triggering information.

The border triggering information can be of a type actively triggered by a user, for example, by means of a select button, a switching mode, or a press button, which can be set by an operator. After triggering the outer border triggering information, an outer border is acquired. In one embodiment, acquiring an outer border is achieved by positioning the positioning tag with regard to the base stations.

**Step 201:** acquiring an information of outer border points corresponding to the outer border based on the outer border triggering information, in which all the outer border points are enclosed to form a closed area of an outer border.

After acquiring the outer border triggering information, acquiring the information of outer border points of an outer border is started. A first acquiring is preferably performed by a manual manner. For example, an operator with an electronic positioning tag walks along the outer border and records the points on the outer border during walking. In this way, the positioning tag records the data on the distances of the tag from individual positioning base stations. Finally, all the outer border points in the information of outer border points are enclosed to form a closed area of the outer border.

**Step 202:** forming an operating area information based on the closed area of the outer border.

The closed area is an area where the walking device can move and work. For example, the walking device moves and works, that is, cutting and trimming grass, in a range corresponding to the operating area information.

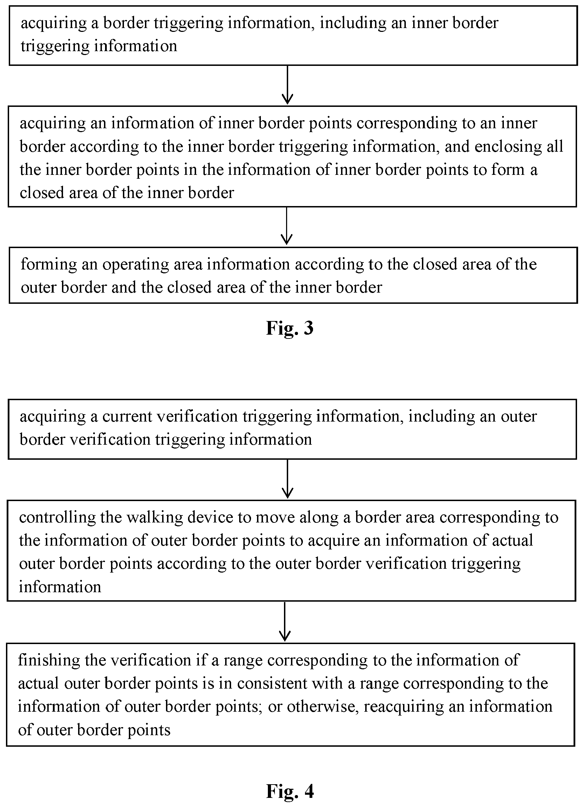

Referring to **FIG. 3****,** an inner border is acquired in addition to the outer border. For example, an inner border can involve in a swimming pool, a flower bed, or the like, which can be selected and defined by a user. Of course, it is possible that there is no inner border, that is, merely a lawn. The operating area information is established by the following steps:
Step **300**: acquiring a border triggering information, which includes an inner border triggering information.

The border triggering information can be of a type actively triggered by a user, for example, by means of a select button, a switching mode, or a press button, which can be set by an operator. After triggering the inner border triggering information, an inner border is acquired. In one embodiment, acquiring an inner border is achieved by positioning the positioning tag with regard to the base stations.

**Step 301:** acquiring an information of inner border points corresponding to an inner border based on the inner border triggering information, in which all the inner border points are enclosed to form a closed area of an inner border.

After acquiring the inner border triggering information, acquiring the information of inner border points of an inner border is started. A first acquiring is preferably performed by a manual manner. For example, an operator with an electronic positioning tag walks along the inner border and records the points on the inner border during walking. In this way, the positioning tag records the data on the distances of the tag from individual positioning base stations. Finally, all the inner border points in the information of inner border points are enclosed to form a closed area of the inner border.

**Step 302:** forming an operating area information based on the closed area of the inner border.

The closed area is an area where the walking device can move and work, and the inner border is within the outer border. The walking device moves and works in a range corresponding to the operating area information, but will not cross the inner border.

At any point in a working site, the positioning tag can measure the linear distances thereof from three base stations. Based on the operating range, the walking device records the data on the distances acquired when moving along the outer border, and forms a three dimensional array. The data of the array is analyzed to find the limit ranges of individual dimensions of the three dimensional array, which are summarized for establishing a quick search and comparison solution.

When the walking device moves in the operating range, the positioning tag rapidly measures the real time linear distances of a current position from three positioning base stations, and makes a rapid comparison of the data of this position over the data of an operating range (the range enclosed by outer border points) and the data of a non-operating range (the range enclosed by inner border points) as stored, so that the walking device does not move out of the operating range or into the non-operating range, achieving the purpose of omitting a border line and the identification of a non-operating area.

Referring to **FIG. 4****,** after manually acquiring the range of the border for the first time, for the purpose of improving the accuracy of the data, the walking device is controlled to make an actual movement along the border. Regarding the outer border, a method for verifying the outer border include:
**Step 400:** acquiring a current verification triggering information, including an outer border verification triggering information.

The current verification triggering information is an information triggered when a user needs to make a verification. It can be of a type actively triggered by a user, for example, by means of a select button, a switching mode, or a press button, which can be set by an operator. After acquiring the outer border verification triggering information, the outer border is verified.

**Step 401:** acquiring an information of actual outer border points by controlling the walking device to move along the border area corresponding to the information of outer border points according to the outer border verification triggering information.

After triggering the outer border verification triggering information, the walking device is controlled to move along the border area corresponding to the information of outer border points. Due to the positioning tag installed on the walking device, the border points are acquired during walking, and thus the information of the actual outer border points is acquired.

The manner for acquiring the information of the actual outer border points are the same as that for acquiring the outer border points and thus are omitted here.

**Step 402:** finishing the verification if the data range corresponding to the information of actual outer border points are consistent with the data range corresponding to the information of the outer border points; or otherwise, reacquiring the information of outer border points.

When the data range corresponding to the information of actual outer border points are consistent with the data range corresponding to the information of outer border points, it shows that the data is correct and completely consistent with the pre-stored data, finishing the verification. If there is some inconsistency in the data, the information of outer border points are reacquired, and the reacquiring of the information is performed.

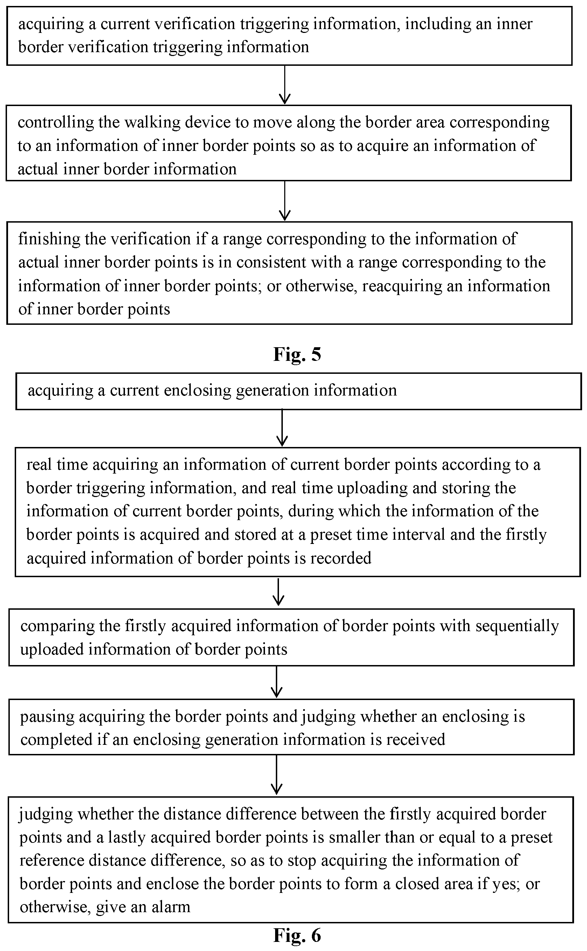

Referring to **FIG. 5****,** after verifying the outer border, an inner border, if any, should be verified. For example, a method for verifying the inner border includes:
**Step 500:** acquiring a current verification triggering information, including an inner border verification triggering information.

The current verification triggering information is an information triggered when a user needs to make a verification. It can be of a type actively triggered by a user, for example, by means of a select button, a switching mode, or a press button, which can be set by a worker. After acquiring the inner border verification triggering information, the inner border is verified.

**Step 501:** acquiring an information of actual inner border points by controlling the walking device to move along the border area corresponding to the information of inner border points according to the inner border verification triggering information.

After triggering the inner border verification triggering information, the walking device is controlled to move along the border area corresponding to the information of inner border points. Due to the positioning tag installed on the walking device, the border points are acquired during walking, and thus the information of actual inner border points is acquired.

The manner for acquiring the information of actual inner border points are the same as that for acquiring the inner border points and thus are omitted here.

**Step 502:** finishing the verification if the data range corresponding to the information of actual inner border points are consistent with the data range corresponding to the information of inner border points; or otherwise, reacquiring the information of inner border points.

When the data range corresponding to the information of actual inner border points are consistent with the data range corresponding to the information of inner border points, it shows that the data is correct and completely consistent with the pre-stored data, finishing the verification. If there is some inconsistency in the data, the information of inner border points are reacquired, and the reacquiring of the information is performed.

Referring to **FIG. 6****,** the border points includes an outer border point and an inner border point, which enclose with each other to form an operating range. A method for enclosing the border points to form a closed area includes:
**Step 600:** acquiring an enclosing generation information.

After finishing the acquiring of the border points, an enclosing generating information is output to inform the system that the enclosing is completed and whether to trigger an enclosing is judged.

**Step 601:** real time acquiring an information of current border points according to a border triggering information, and real time uploading and storing the information, during which the information of the border points is acquired and stored at a preset time interval and the firstly acquired information of border points is recorded.

According to the type of a border triggering information, the information of corresponding border points is acquired and stored. Acquiring the information of border points is performed at a preset time interval. In one embodiment, the time interval is preset by an operator according to actual needs.

**Step 602:** comparing the firstly acquired information of border points with sequentially uploaded information of border points.

By comparing the firstly acquired information of border points with sequentially uploaded information of border points, it can be determined whether an enclosed range can be completed.

**Step 603:** pausing acquiring the border points and judging whether an enclosing is completed if an enclosing generation information is received.

Due to a manual acquiring, acquiring the border points is paused after receiving the enclosing generation information. Instead, the border points are acquired from the firstly acquired information of border points, and compared.

**Step 604:** judging whether the distance difference between the firstly acquired border points and a lastly acquired border points is smaller than or equal to a preset reference distance difference, so as to stop acquiring the information of border points and enclose the border points to form a closed area if it is yes, or otherwise, give an alarm.

Whether the distance difference between the firstly acquired border point and a lastly acquired border points is smaller than or equal to a preset reference distance difference is judged, so as to stop acquiring the information of border points and enclose the border points to form a closed area if it is yes; or otherwise, give an alarm. In this way, the worker can be informed of a mistake, which can be handled by the worker at a later time.

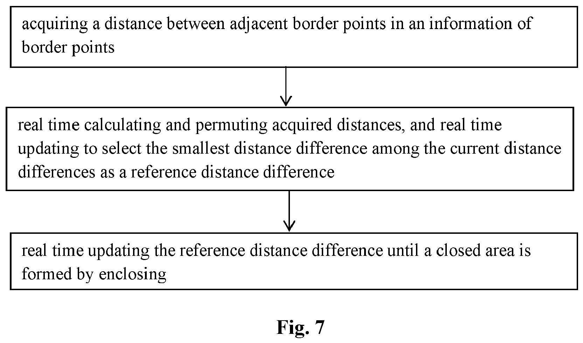

Referring to **FIG. 7****,** considering the difference between the size of different paces, a reference distance difference should be acquired according to users, so as to improve the overall accuracy. A method for acquiring a reference distance difference includes:
**Step 700:** acquiring the distance between adjacent border points in the information of border points.

Firstly, the information of border points is acquired so as to judge the distance between adjacent border points.

**Step 701:** real time calculating and permuting acquired distance, and real time updating to select the smallest distance difference among the current distance differences as a reference distance difference.

The calculated distances are permuted so as to select the smallest distance difference among the current distance differences as a reference distance difference.

**Step 702:** real time updating the reference distance difference until a closed area is formed by enclosing.

During the acquirement, before forming a closed area by enclosing, the reference distance difference will be continuously updated until the smallest distance difference is selected, so as to improve the overall accuracy.

Furthermore, when the walking device is moving, attention should be paid to the amount of the electricity remained in the walking device so as to avoid the situation of stopping operating due to low electricity. Since the walking device cannot be automatically recharged, there provided is a method for automatically returning and charging, including:
**Step 800:** acquiring a current electricity information of the current walking device.

By detecting the current flowing in a current battery, the amount of the remained electricity in the walking device can be judged and the current electricity information can be acquired.

**Step 801:** judging whether the current electricity information is smaller than a preset lowest electricity information.

A lowest electricity information is a preset electricity information, which is matched with the linear distance between a current position and a charging base. That is, the lowest electricity information varies with the linear distance, and is compared with a current electricity information.

**Step 802:** controlling the current walking device to return to a preset charging coordinates where a preset charging base is for charging if the amount of electricity corresponding to the current electricity information is lower than the amount of electricity corresponding to the lowest electricity information; or otherwise, controlling the walking device to continue operating.

The current walking device is controlled to return to a preset charging coordinates where a preset charging base is for charging if the amount of electricity corresponding to the current electricity information is lower than the amount of electricity corresponding to the lowest electricity information; or otherwise, the walking device is controlled to continue operating.

Preferably, the walking device is returned from a current position to the coordinates corresponding to the charging base. If an inner border point is in the way during returning, it is bypassed by the walking device in a tilt angle so as to return for charging. In one embodiment, the tilt angle forms a L-shaped step.

Based on the same inventive concept, a system for controlling the operating range of a walking device is provided in one embodiment, which includes:
an acquiring module, configured to acquire a position information, a border triggering information, an enclosing generation information, and a border point;
a storage device, configured to store the steps of the methods as shown in FIGS. 1-7; and
a processor, configured to load and execute the steps stored in the storage device and achieve the methods as shown in **FIGS. 1-7****.**

In one embodiment, a computer readable storage medium is provided for storing a computer program which can be loaded and executed by a processor to achieve the methods as shown in **FIGS. 1-7****.**

Based on the same inventive concept, an intelligent terminal is provided in one embodiment, which includes a storage device and a processor, with a computer program being stored in the storage device and being able to be loaded by the processor to execute any of the methods as shown in **FIGS. 1-7****.**

## Claims

1. A method for controlling an operating range of a walking device, **characterized in** comprising:
acquiring a current position information of the walking device in a use place;
judging whether the position of the walking device is in a preset operating area information according to the current position information;
outputting a feedback information to the walking device so that the walking device moves and works in an operating area corresponding to the operating area information if the position of the walking device is in the operating area information;
the operating area information being established by the steps of:
acquiring a border triggering information, comprising an outer border triggering information;
acquiring an information of outer border points corresponding to an outer border according to the outer border triggering information, and enclosing all the border points in the information of outer border points to form a closed area of the outer border; and
forming an operating area information according to the closed area of the outer border.

2. The method according to claim 1, **characterized in that** the operating area information is established by the steps of:
acquiring a border triggering information, including an inner border triggering information;
acquiring an information of inner border points corresponding to an inner border according to the inner border triggering information, and enclosing all the inner border points in the information of inner border points to form a closed area of the inner border; and
forming an operating area information according to the closed area of the outer border and the closed area of the inner border.

3. The method according to claim 1 or 2, **characterized in** further comprising:
acquiring a current verification triggering information, including an outer border verification triggering information;
controlling the walking device to move along a border area corresponding to the information of outer border points to acquire an information of actual outer border points according to the outer border verification triggering information; and
finishing the verification if a range corresponding to the information of actual outer border points is in consistent with a range corresponding to the information of outer border points; or otherwise, reacquiring an information of outer border points.

4. The method according to claim 2, **characterized in** further comprising:
acquiring a current verification triggering information, including an inner border verification triggering information;
controlling the walking device to move along the border area corresponding to an information of inner border points so as to acquire an information of actual inner border information; and
finishing the verification if a range corresponding to the information of actual inner border points is in consistent with a range corresponding to the information of inner border points; or otherwise, reacquiring an information of inner border points.

5. The method according to claim 2, **characterized in that** forming a closed area by enclosing the border points comprises:
acquiring a current enclosing generation information;
real time acquiring an information of current border points according to a border triggering information, and real time uploading and storing the information of current border points, during which the information of the border points is acquired and stored at a preset time interval and the firstly acquired information of border points is recorded;
comparing the firstly acquired information of border points with sequentially uploaded information of border points;
pausing acquiring the border points and judging whether an enclosing is completed if an enclosing generation information is received; and
judging whether the distance difference between the firstly acquired border points and a lastly acquired border points is smaller than or equal to a preset reference distance difference, so as to stop acquiring the information of border points and enclose the border points to form a closed area if yes; or otherwise, give an alarm.

6. The method according to claim 5, **characterized in that** acquiring a reference distance difference comprises:
acquiring a distance between adjacent border points in an information of border points;
real time calculating and permuting acquired distances, and real time updating to select the smallest distance difference among the current distance differences as a reference distance difference; and
real time updating the reference distance difference until a closed area is formed by enclosing.

7. A system for controlling an operating range of a walking device, **characterized in** comprising:
an acquiring module, configured to acquire a position information, a border triggering information, an enclosing generation information, and a border point;
a storage device, configured to store steps of a method for controlling an operating range of a walking device; and
a processor, configured to load and execute the steps stored in the storage device and achieve the method for controlling an operating range of a walking device.

8. An intelligent terminal, **characterized in** comprising a storage device and a processor, with a computer program being stored in the storage device and being able to be loaded by the processor to execute a method for controlling an operating range of a walking device.

## Amended claims

### Amended claims in accordance with Rule 137(2) EPC.

1. A method for controlling an operating range of a walking device, comprising:
acquiring a current position information of the walking device in a use place;
judging whether the position of the walking device is in a preset operating area according to the current position information;
outputting a feedback information to the walking device so that the walking device moves and works in an operating area corresponding to the operating area information if the position of the walking device is in the operating area;
the operating area information being established by the steps of:
acquiring a border triggering information, comprising an outer border triggering information;
acquiring an information of outer border points corresponding to an outer border according to the outer border triggering information, and enclosing all the border points in the information of outer border points to form a closed area of the outer border; and
forming an operating area information according to the closed area of the outer border,
**characterized by** further comprising:
acquiring a current verification triggering information, including an outer border verification triggering information;
controlling the walking device to move along a border area corresponding to the information of outer border points to acquire an information of actual outer border points according to the outer border verification triggering information; and
finishing the verification if a data range corresponding to the information of actual outer border points is in consistent with a data range corresponding to the information of outer border points; or otherwise, reacquiring an information of outer border points.

2. The method according to claim 1, **characterized in that** the operating area information is established by the steps of:
acquiring a border triggering information, including an inner border triggering information;
acquiring an information of inner border points corresponding to an inner border according to the inner border triggering information, and enclosing all the inner border points in the information of inner border points to form a closed area of the inner border; and
forming an operating area information according to the closed area of the outer border and the closed area of the inner border.

3. The method according to claim 2, **characterized in** further comprising:
acquiring a current verification triggering information, including an inner border verification triggering information;
controlling the walking device to move along the border area corresponding to an information of inner border points so as to acquire an information of actual inner border information; and
finishing the verification if a data range corresponding to the information of actual inner border points is in consistent with a data range corresponding to the information of inner border points; or otherwise, reacquiring an information of inner border points.

4. The method according to claim 2, **characterized in that** forming a closed area by enclosing the border points comprises:
acquiring a current enclosing generation information;
real time acquiring an information of current border points according to a border triggering information, real time uploading and storing the information of current border points, acquiring and storing the information of the border points at a preset time interval, and recording a firstly acquired information of border points;
comparing the firstly acquired information of border points with subsequent uploaded information of border points;
pausing acquiring the border points and judging whether an enclosing is completed if an enclosing generation information is received; and
judging whether the distance difference between the firstly acquired border points and lastly acquired border points is smaller than or equal to a preset reference distance difference, so as to stop acquiring the information of border points and enclose the border points to form a closed area if yes; or otherwise, give an alarm.

5. The method according to claim 4, **characterized in that** acquiring a reference distance difference comprises:
acquiring a distance between adjacent border points in an information of border points;
real time calculating and permuting acquired distances, and real time updating to select the smallest distance difference among the current distance differences as a reference distance difference; and
real time updating the reference distance difference until a closed area is formed by enclosing.
